# EUROPÄISCHE PATENTSCHRIFT

(11) **EP 2 557 665 B1**
(45) Veröffentlichungstag und Bekanntmachung des Hinweises auf die Patenterteilung: **15.01.2014**
(21) Anmeldenummer: 11177137.4
(22) Anmeldetag: 10.08.2011
(51) Int. Cl.: H02K 5/08, H02K 15/12, H02K 3/52

(54) **Stator für einen Elektromotor**
Stator unit for an electric motor
Stator pour un moteur électrique

(43) Veröffentlichungstag der Anmeldung: 13.02.2013
(73) Patentinhaber: ebm-papst Mulfingen GmbH & Co. KG, 74673 Mulfingen (DE)
(72) Erfinder: Hofmann, Walter, 74673 Mulfingen- Ailringen (DE); Bickel, Rolf, 97999 Igersheim (DE)
(74) Vertreter: Patentanwälte Dr. Solf & Zapf

(56) Entgegenhaltungen:
- EP-A1- 1 727 261
- EP-A1- 2 214 293

## Beschreibung

Die Erfindung betrifft einen Stator für einen Elektromotor, insbesondere für einen Außenläufermotor, umfassend einen Grundkörper mit einem Statorblechpaket, sowie mit auf dem Statorblechpaket angeordneten Statorwicklungen, die jeweils einen Wickeldrahtanfang und ein Wickeldrahtende aufweisen, wobei jeder Wickeldrahtanfang an Kontaktstiften angeschlossen ist, wobei der Grundkörper mit einer aus Kunststoff bestehenden Hülle umspritzt ist, aus der die Kontaktstifte zumindest teilweise herausragen.

Die EP 1 727 261 A1 beschreibt einen Stator mit einer auf einer Stirnseite im Bereich eines Wickelkopfes der Statorwicklung angeordneten Verschaltungsanordnung zum elektrischen Verschalten von Wicklungsdrahtenden der Statorwicklung, wobei an der Verschaltungsanordnung zusätzliche Kontaktelemente als Anschlusskontakte für äußere Anschlussleitungen und/oder als Kontaktbrücke zwischen mindestens zwei Verschaltungspunkten gehaltert sind.

Um die Wicklung von Elektromotoren vor Umwelteinflüssen zu schützen, wird häufig die sogenannte Umpresstechnik angewandt. Dabei wird eine fertig gewickelte Statorspule mit einer duroplastischen oder thermoplastischen Formmasse durch einen Spritzvorgang umhüllt. Auf Grund der mechanischen Eigenschaften kann diese Formmasse zusätzlich weitere Funktionen übernehmen. Um dabei eine einfache und kostengünstige Montage, z. B. durch modularen Aufbau, zu ermöglichen, müssen die elektrischen Verbindungen nach außen geführt werden. Dies geschieht häufig durch Steckkontakte.

Bei den Konstruktionen, die dem Stand der Technik entsprechen, werden dabei die Wickeldrähte insbesondere manuell in Kontaktelementen positioniert, welche vorher am Stator mittels eines Pressvorgangs befestigt wurden. Außerdem muss, um die für den Umpressvorgang notwendige Führung und den Schutz der Wickeldrähte zu gewährleisten, ein Hilfselement auf dem Stator positioniert werden, welches diese Funktion erfüllen kann. Die eigentliche Kontaktierung der Wickeldrähte erfolgt dann mittels Heißpressen.

Das Werkzeug, welches bei Anwendung der Umpresstechnik den Hohlraum für die Umpressung bildet, muss für diese Steckkontakte Aussparungen besitzen, die größer sind als die Kontaktelemente. Bei den bekannten, in der Praxis angewandten technischen Lösungen dringt daher beim Umpressen nachteiligerweise Werkstoff in den durch die Aussparungen und die Kontaktstifte gebildeten Hohlraum. Dieser muss in einem nachgeschalteten Prozess, häufig manuell, wieder entfernt werden.

Der Erfindung liegt die Aufgabe zu Grunde, einen Stator der eingangs genannten Art zu schaffen, mit dem unter Beseitigung der genannten Nachteile auf konstruktive Weise der Aufwand bei der Herstellung gesenkt werden kann.

Diese Aufgabe wird erfindungsgemäß durch einen Stator nach Anspruch 1 gelöst, wobei ein zusammen mit dem Grundkörper von der Hülle umgebener Kontakthalter über das freie Ende der Kontaktstifte auf den Grundkörper aufgeschoben ist, wobei der Kontakthalter die Kontaktstifte mit einem Dichtabschnitt spaltfrei dichtend umfasst.

Durch die Verwendung des erfindungsgemäß als Statorbestandteil vorgesehenen Kontakthalters ist es mit Vorteil möglich, den Fertigungsschritt "Überschüssigen Werkstoff entfernen" einzusparen, da der Kontakthalter bei einem Umspritzvorgang die nach außen stehenden Kontaktstifte gegen das Umspritzwerkzeug abdichtet. Mit anderen Worten ermöglicht es der Kontakthalter, insbesondere, wenn er aus einem elastischen Material besteht, dass das Werkzeug über ihn in direkten Kontakt mit den zu umhüllenden Statorbauteilen tritt, so dass alle Hohlräume für die Kontaktelemente sicher verschlossen werden können, ohne dass danach die bei den bekannten Statoren üblicherweise zu praktizierenden Reinigungsprozesse notwendig wären.

Außerdem wirkt der Kontakthalter dabei positionierend auf die Bauteile am Stator und kann darüber hinaus, wenn er aus einem entsprechenden dielektrischen Material gefertigt ist, die Wicklungsdrähte sowie stromführende Elemente gegen die Wicklung und nach außen hin elektrisch isolieren. Des Weiteren kann der Kontakthalter als konstruktive Hilfe dienen, um die Wickeldrahtenden der Statorwicklungen in dem gemeinsamen Sternpunkt miteinander zu verbinden, indem im Kontakthalter eine Schaltbrücke gehalten werden kann. Noch weitere Vorteile der Erfindung bestehen darin, dass sich durch die Präsenz des Kontakthalters die Robustheit des Stators erhöht und seine Herstellung leichter automatisiert durchgeführt werden kann.

Weitere vorteilhafte Ausführungen der Erfindung sind auch in den Unteransprüchen und der nachfolgenden Beschreibung enthalten. Anhand eines in den beiliegenden Zeichnungsfiguren dargestellten Ausführungsbeispiels wird die Erfindung näher erläutert. Es zeigen:
- Fig. 1: in einer perspektivischen Aufsicht, einen Kontakthalter eines erfindungsgemäßen Stators,
- Fig. 2: in einer perspektivischen Unteransicht, den in Fig. 1 dargestellten Kontakthalter,
- Fig. 3: in einer perspektivischen Explosionsdarstellung, den in Fig. 1 dargestellten Kontakthalter und einen Grundkörper eines erfindungsgemäßen Stators,
- Fig. 4: in perspektivischer Darstellung, die beiden in Fig. 3 dargestellten Bauteile eines erfindungsgemäßen Stators im Zusammenbau,
- Fig. 5: in perspektivischer Darstellung, einen erfindungsgemäßen Stator im Fertigzustand,
- Fig. 6: in einer Schnittdarstellung gemäß der Linie VI-VI in Fig. 4, die beiden in Fig. 3 dargestellten Bauteile eines erfindungsgemäßen Stators im Zusammenbau,
- Fig. 7: eine entlang der Linie Vll-Vll geschnittene und vergrößerte Detailansicht des in Fig. 1 und 3 dargestellten Kontakthalters eines erfindungsgemäßen Stators.

Zu der anschließenden Beschreibung wird ausdrücklich betont, dass die Erfindung nicht auf die Ausführungsbeispiele und dabei auch nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

In den Figuren der Zeichnung sind dieselben Teile auch stets mit denselben Bezugszeichen versehen, so dass sie in der Regel auch jeweils nur einmal beschrieben werden.

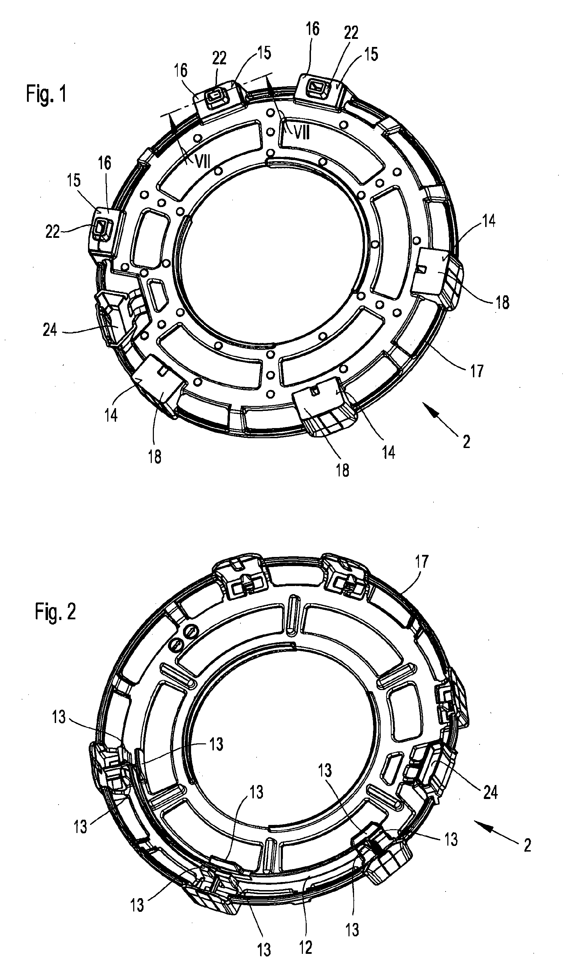

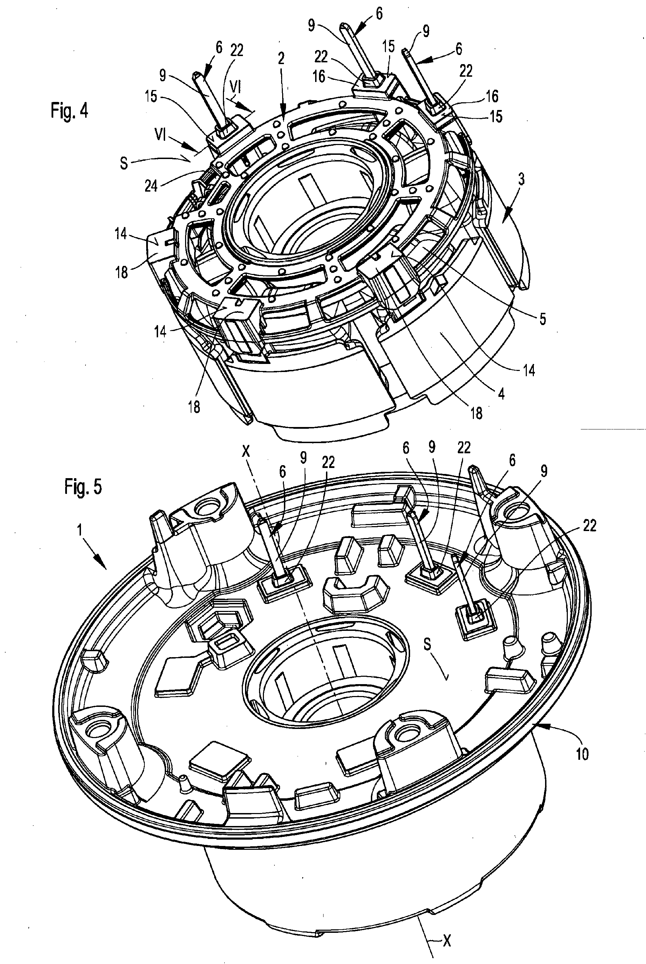

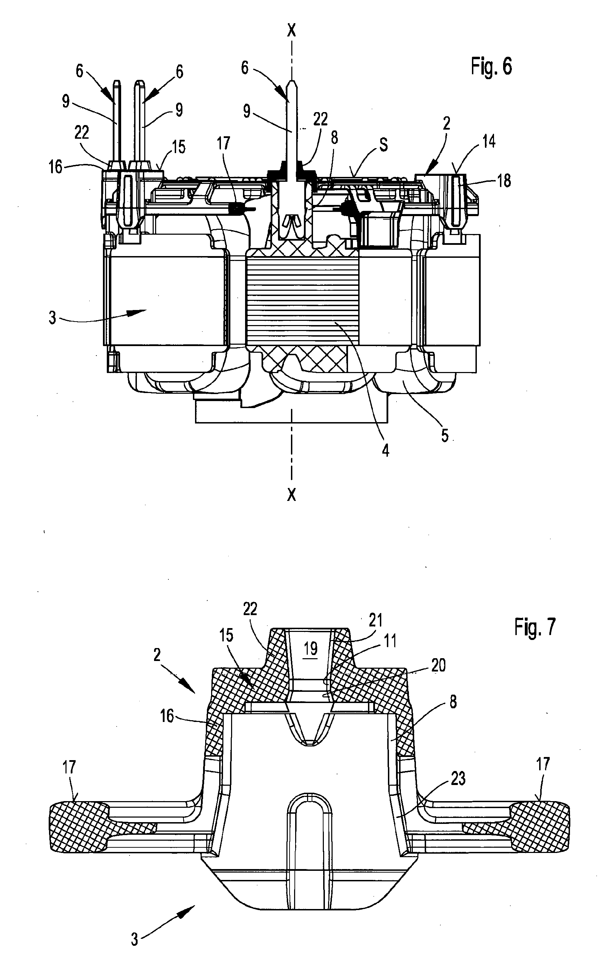

Wie zunächst aus den Darstellungen in Fig. 1 bis 4 hervorgeht, ist es für einen erfindungsgemäßen Stator 1, der im Fertigzustand in Fig. 5 gezeigt ist, erfindungswesentlich, dass er einen erfindungsgemäßen Kontakthalter 2 umfasst, der in Fig. 1 bis 3 als Einzelteil und in Fig. 4 und 6 im Zusammenbau mit einem Grundkörper 3 des erfindungsgemäßen Stators 1 gezeigt ist.

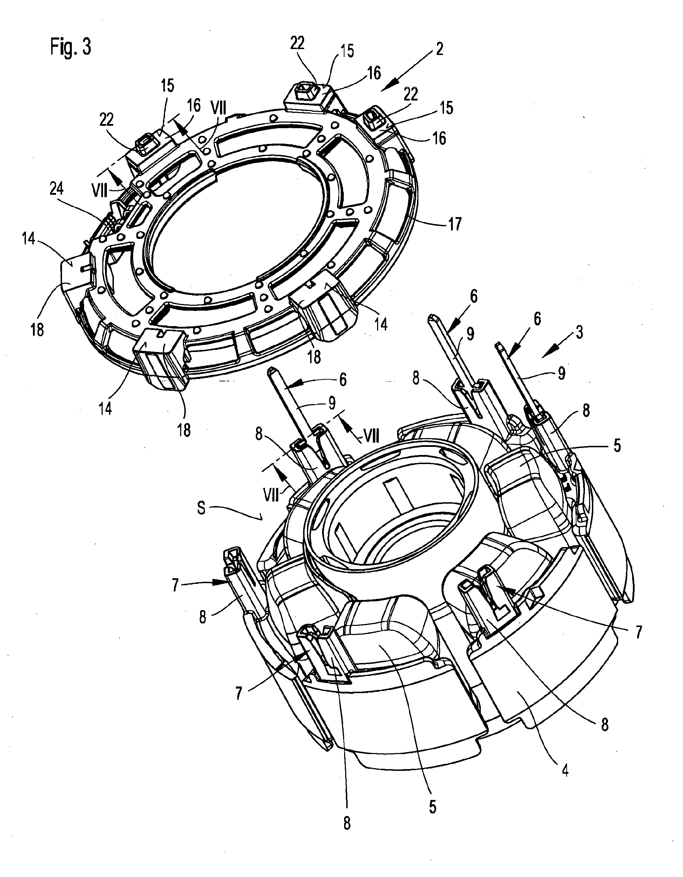

Der Grundkörper 3 selbst ist in der Explosionsdarstellung in Fig. 3 als Einzelteil und in den Darstellungen von Fig. 4 und 6 im Zusammenbau mit dem Kontakthalter 2 gezeigt.

Der Grundkörper 3 umfasst - wie besonders deutlich der Schnittdarstellung in Fig. 6 zu entnehmen ist - ein Statorblechpaket 4 sowie in diesem angeordnete Statorwicklungen 5, die jeweils einen Wickeldrahtanfang und ein Wickeldrahtende aufweisen. Die eigentlichen Wickeldrahtanfänge und -enden sind in der zeichnerischen Darstellung nicht zu sehen, da sie verdeckt liegen, jedoch sind in Fig. 3 bis 6 die Kontaktelemente 6 erkennbar, an denen jeweils die Wickeldrahtanfänge angeschlossen sind, und in Fig. 3 auch die Kontaktelemente 7, an denen jeweils die Wickeldrahtenden angeschlossen sind. Bei den genannten Kontaktelementen 6, 7 handelt es sich um an sich bekannte Schneidklemmkontakte für die Wickeldrahtanfänge und für die Wickeldrahtenden. Diese befinden sich jeweils in einem domartig von einer senkrecht zur Längsachse X-X ausgerichteten Stirnseite S des Stators 1 abstehenden Kontaktgehäuseteil 8. Was die Kontaktelemente 6 für die Wickeldrahtanfänge betrifft, so sind diese im jeweiligen Kontaktgehäuseteil 8 fixiert.

Im Montagezustand sind der Grundkörper 3 und der auf der Stirnseite des Stators 1 aufgesetzte Kontakthalter 2 mit einer aus Kunststoff bestehenden Hülle 10 umspritzt, aus der die Kontaktstifte 9 teilweise herausragen. Erfindungsgemäß ist dabei vorgesehen, dass der zusammen mit dem Grundkörper 3 von der Hülle 10 umgebene Kontakthalter 2 über das freie Ende der Kontaktstifte 9 auf den Grundkörper 3 aufgeschoben ist, wobei er die Kontaktstifte 9 mit einem Dichtabschnitt spaltfrei dichtend umfasst. Dieser Dichtabschnitt ist in der vergrößerten Darstellung gemäß Fig. 7 mit dem Bezugszeichen 11 gekennzeichnet. Insbesondere schließt dabei der Kontakthalter 2 das vom Grundkörper 3 des Stators 1 stirnseitig abstehende Kontaktgehäuseteil 8 für den Kontaktstift 9 nach außen ab.

Um die Wickeldrahtenden der Statorwicklungen 5 vorzugsweise in einem gemeinsamen Sternpunkt miteinander zu verbinden, kann eine Schaltbrücke 12 vorgesehen sein, wie sie der Darstellung in Fig. 2 zu entnehmen ist. Diese Schaltbrücke 12 kann - wie dargestellt - bevorzugt als ein Metallstreifen ausgeführt sein, der die Schneidklemmkontakte kontaktiert und zu seiner Halterung unterseitig in federnd ausgebildete Halteelemente 13 des Kontakthalters 2 eingeklipst wird.

Den Halteelementen 13 oberseitig auf dem Kontakthalter 2 gegenüberliegend sind Abdeckbereiche 14 des Kontakthalters 2 vorgesehen, mittels derer die vom Grundkörper 3 des Stators 1 abstehenden Kontaktgehäuseteile 8, die in der dargestellten Ausführung ebenso ausgeführt sind, wie die Kontaktgehäuseteile 8 mit den Kontaktstiften 9, oberseitig vollständig abgedeckt werden.

Den Abdeckbereichen 14 für die Kontaktgehäuseteile 8 ohne Kontaktstifte 9 entsprechen - wie z. B. Fig. 1 zeigt - Dichtbereiche 15 für die Kontaktgehäuseteile 8 mit Kontaktstiften 9. In diesen Dichtbereichen 15 befinden sich - wie dies insbesondere Fig. 7 veranschaulicht - die Dichtabschnitte 11, welche erfindungsgemäß die Kontaktstifte 9 umfassen. Fig. 7 zeigt auch, dass die Dichtbereiche 15 dabei bevorzugt als Dome 16 ausgeführt sein können, die auf einem umlaufenden Rand 17 des Kontakthalters 2 angeordnet sind, die einen Teil des Kontakthalters 2 bilden. Gleiches trifft auch auf die Abdeckbereiche 14 zu, wo die entsprechenden Dome mit dem Bezugszeichen 18 versehen sind. In Fig. 7 ist kein Kontaktstift 9 dargestellt, jedoch ein Kanal 19, der den Dichtbereich 15 durchsetzt und durch den im Montagezustand der Kontaktstift 9 geführt ist. Der Kanal hat insbesondere einen bikonischen inneren Verlauf, wobei ein dem Grundkörper 3 des Stators 1 zugewandter Konus 20 als Einführschräge für den Kontaktstift 9 dient, wenn der Kontakthalter 2 bei der Montage über das freie Ende des Kontaktstiftes 9 geführt wird. Ein dem Grundkörper 3 des Stators 1 abgewandter Konus 21 dient als Auszugsschräge für das Werkzeug, durch das die Hülle 10 hergestellt wird. Für den zweiten Konus 21 kann - wie gezeigt - ein ihn umgebender zusätzlicher Domaufbau 22 vorgesehen sein, der im Gegensatz zu den übrigen Teilen des Dichtbereichs 15 und auch im Gegensatz zu den Abdeckbereichen 14 für die Kontaktgehäuseteile 8 ohne Kontaktstifte 9 nach der Umhüllung mit dem Kunststoff stirnseitig noch aus der Hülle 10 des Stator 1 hervorsteht. Dies zeigt Fig. 5.

Auch das unter dem Dichtbereich 15 angeordnete Kontaktgehäuseteil 8 kann - wie ebenfalls Fig. 7 zeigt - zum leichteren Fügen des Kontakthalters 2 eine Einführschräge 23 aufweisen. Nach dem Aufsetzen des Kontakthalters 2 sind sowohl die Wickeldrahtanfänge bzw. -enden, als auch die Durchführungen der Kontaktstifte 9 abgedichtet.

Der Kontakthalter 2 kann bevorzugt - wie dargestellt - einstückig als Spritzgieß- oder Pressformteil mit ringförmiger Grundgestalt oder in Form von einem oder mehreren Kreisringsegmenten ausgeführt sein. Ein geschlossener Ring verleiht dem Kontakthalter 2 dabei aber eine höhere Stabilität als ein Kreisringsegment und besitzt beim Aufschieben auf den Grundkörper 3 eine stärkere justierende Wirkung auf die Kontaktstifte 9.

Der Fachmann kann die Erfindung durch weitere zweckmäßige technische Maßnahmen ergänzen, ohne dass der Rahmen der Erfindung verlassen wird. So können beispielsweise in dem Kontakthalter 2 Taschen für bestimmte Bauteile vorgesehen sein, wie die in Fig. 1 bis 4 dargestellte Tasche 24 für einen Hall-Sensor.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern ist die Anspruchsfassung lediglich als ein erster Formulierungsversuch für eine Erfindung zu verstehen.

### Bezugszeichenliste

- 1: Stator
- 2: Kontakthalter von 1
- 3: Grundkörper von 1
- 4: Statorblechpaket von 3
- 5: Statorwicklungen von 3
- 6: Kontaktelemente für Wickeldrahtanfänge von 5
- 7: Kontaktelemente für Wickeldrahtenden von 5
- 8: Kontaktgehäuseteil für 6, 7
- 9: Kontaktstift von 6
- 10: Hülle von 1 um 2 und 3 (Fig. 6)
- 11: Dichtabschnitt von 2
- 12: Schaltbrücke für Wickeldrahtenden von 5
- 13: Halteelemente an 2 für 12
- 14: Abdeckbereich von 2 für 8
- 15: Dichtbereich von 2 für 8/9
- 16: Dom von 15
- 17: umlaufender Rand von 2
- 18: Dom von 14
- 19: Kanal in 15 mit 11, 20, 21
- 20: Konus für 9
- 21: Konus für Werkzeug
- 22: Domaufbau auf 16
- 23: Einführschräge von 8 für 9
- 24: Tasche

- S: Stirnseite von 1
- X-X: Längsachse von 1

## Patentansprüche

1. Stator (1) für einen Elektromotor, insbesondere für einen Außenläufermotor, umfassend einen Grundkörper (3) mit einem Statorblechpaket (4), sowie mit auf dem Statorblechpaket (4) angeordneten Statorwicklungen (5), die jeweils einen Wickeldrahtanfang und ein Wickeldrahtende aufweisen, wobei jeder Wickeldrahtanfang an Kontaktstiften (9) angeschlossen ist und die Wickeldrahtenden insbesondere in einem gemeinsamen Sternpunkt miteinander verbunden sind, wobei ein Kontakthalter (2) über das freie Ende der Kontaktstifte (9) auf den Grundkörper (3) aufgeschoben ist, wobei der Kontakthalter (2) die Kontaktstifte (9) mit einem Dichtabschnitt (11) spaltfrei dichtend umfasst,
**dadurch gekennzeichnet, dass**
der Grundkörper (3) zusammen mit dem Kontakthalter (2) mit einer aus Kunststoff bestehenden Hülle (10) umspritzt ist, aus der die Kontaktstifte (9) zumindest teilweise herausragen.

2. Stator (1) nach Anspruch 1,
**dadurch gekennzeichnet, dass** der Kontakthalter (2) einstückig als Spritzgießteil mit ringförmiger Grundgestalt oder in Form eines oder mehrerer Kreisringsegmente ausgeführt ist.

3. Stator (1) nach Anspruch 1 oder 2,
**dadurch gekennzeichnet, dass** der Kontakthalter (2) mit einem Dichtbereich (15), in dem sich der Dichtabschnitt (11) befindet, mindestens ein vom Grundkörper (3) des Stators (1) abstehendes Kontaktgehäuseteil (8), durch welches der Kontaktstift (9) geführt ist, verschließt.

4. Stator (1) nach einem der Ansprüche 1 bis 3,
**dadurch gekennzeichnet, dass** der Kontakthalter (2) mit einem Abdeckbereich (14) mindestens ein vom Grundkörper (3) des Stators (1) abstehendes Kontaktgehäuseteil (8), durch welches kein Kontaktstift (9) geführt ist, vollständig abdeckt.

5. Stator (1) nach Anspruch 3 oder 4,
**dadurch gekennzeichnet, dass** die Dichtbereiche (15) und/oder die Abdeckbereiche (14) dabei bevorzugt als Dome (16, 18) ausgeführt sind, die auf einer Deckfläche 17 des Kontakthalters 2 angeordnet sind, welche einen Teil der Stirnfläche des Grundkörpers (3) des Stators (1) bildet.

6. Stator (1) nach einem der Ansprüche 3 bis 5,
**dadurch gekennzeichnet, dass** jeder Dichtbereich (15) von einem insbesondere bikonisch ausgebildeten Kanal (19) durchsetzt ist, durch den der Kontaktstift (9) geführt ist.

7. Stator (1) nach einem der Ansprüche 1 bis 6,
**dadurch gekennzeichnet, dass** die Wickeldrahtenden der Statorwicklungen (5) über eine Schaltbrücke (12) in einem gemeinsamen Sternpunkt miteinander verbunden sind, welche im Kontakthalter (2) befestigt, insbesondere in Halteelementen (13) desselben eingeklipst, ist.

8. Stator (1) nach einem der Ansprüche 3 bis 7,
**dadurch gekennzeichnet, dass** das Kontaktgehäuseteil (8), durch welches der Kontaktstift (9) geführt ist, eine konische Öffnung bzw. eine Einführschräge (23) zur Montage des Kontaktstiftes (9) aufweist.

## Claims

1. A stator (1) for an electric motor, in particular for an external rotor motor, comprising a basic body (3) having a laminated stator core (4), as well as stator coils (5) arranged on the laminated stator core (4), each having a winding wire start and a winding wire end, wherein each winding wire start is attached to contact pins (9) and the winding wire ends are connected in particular to each other at a common hub, wherein a contact holder (2) is pushed via the free end of the contact pins (9) onto the basic body (3), wherein the contact holder (2) encases the contact pins (9) with a sealing section (11) in a gap-free, sealing manner,
**characterized in that**
the basic body (3) along with the contact holder (2) is extrusion-coated with a plastic sleeve (10), from which the contact pins (9) at least partially protrude

2. The stator (1) of claim 1,
**characterized in that** the contact holder (2) is designed as a one-piece, injection-molded part with a ring-shaped basic design or in the form of one or several circular ring segments.

3. The stator (1) of claim 1 or 2,
**characterized in that** the contact holder (2), having a sealing area (15) in which the sealing section (11) is located, seals at least one contact housing part (8) that protrudes from the basic body (3) of the stator (1), through which the contact pin (9) is guided.

4. The stator (1) of one of the claims 1 to 3,
**characterized in that** the contact holder (2) having a cover area (14) completely covers at last one contact housing part (8) that protrudes from the basic body (3) of the stator (1), through which no contact pin (9) is guided.

5. The stator (1) of claim 3 or 4,
**characterized in that** the sealing areas (15) and/or the covering areas (14) are at the same time preferably configured as domes (16, 18), which are arranged on a top surface 17 [translator note: reference numeral 17 identifies a "surrounding edge" in the description] of the contact holder 2, which forms a part of the front face of the basic body (3) of the stator (1).

6. The stator (1) of one of the claims 3 to 5,
**characterized in that** each sealing area (15) is penetrated by a channel (19) having an especially biconical configuration, through which the contact pin (9) is guided.

7. The stator (1) of one of the claims 1 to 6,
**characterized in that** the winding wire ends of the stator coils (5) are connected to each other at a common hub via a connecting bridge (12), which is secured in a contact holder (2), in particular snapped in holding elements (13) thereof.

8. The stator (1) of one of the claims 3 to 7,
**characterized in that** the contact housing part (8), through which the contact pin (9) is guided, has a conical opening or lead-in chamfer (23) for installation of the contact pin (9).

## Revendications

1. Stator (1) pour un moteur électrique, en particulier pour un moteur à induit extérieur, comprenant un corps de base (3) doté d'un empilement de tôles de stator (4), ainsi que d'enroulements de stator (5) disposés sur l'empilement de tôles de stator (4), lesquels enroulements de stator présentent respectivement un début de fil métallique de bobinage et une fin de fil métallique de bobinage, dans lequel chaque début de fil métallique de bobinage est raccordé à des broches de contact (9) et dans lequel les fins de fil métallique de bobinage sont reliées entre elles en particulier en un point neutre commun, dans lequel un support de contact (2) est enfilé sur le corps de base (3) par l'intermédiaire de l'extrémité libre des broches de contact (9), le support de contact (2) comportant de manière étanche sans interstice les broches de contact (9) dotées d'une section étanche (11),
**caractérisé en ce que**
le corps de base (3) est enrobé par injection conjointement avec le support de contact (2) d'une enveloppe (10) constituée d'une matière plastique, enveloppe à partir de laquelle dépassent au moins en partie les broches de contact (9).

2. Stator (1) selon la revendication 1,
**caractérisé en ce que** le support de contact (2) est réalisé d'un seul tenant sous la forme d'une pièce moulée par injection présentant une forme de base annulaire ou sous la forme d'un ou de plusieurs segments annulaire.

3. Stator (1) selon la revendication 1 ou 2,
**caractérisé en ce que** le support de contact (2) doté d'une zone étanche (15), dans laquelle se trouve la section étanche (11), obture au moins une partie de carter de contact (8) faisant saillie à partir du corps de base (3) du stator (1), à travers laquelle la broche de contact (9) est guidée.

4. Stator (1) selon l'une quelconque des revendications 1 à 3,
**caractérisé en ce que** le support de contact (2) doté d'une zone de recouvrement (14) recouvre intégralement au moins une partie de carter de contact (8) faisant saillie à partir du corps de base (3) du stator (1), à travers laquelle aucune broche de contact (9) n'est guidée.

5. Stator (1) selon la revendication 3 ou 4,
**caractérisé en ce que** les zones étanches (15) et/ou les zones de recouvrement (14) sont réalisées de préférence sous la forme de dômes (16, 18), qui sont disposés sur une surface supérieure (17) du support de contact (2), ladite surface supérieure constituant une partie de la surface frontale du corps de base (3) du stator (1).

6. Stator (1) selon l'une quelconque des revendications 3 à 5,
**caractérisé en ce que** chaque zone étanche (15) est traversée par un canal (19) réalisé en particulier de manière biconique, à travers lequel la broche de contact (9) est guidée.

7. Stator (1) selon l'une quelconque des revendications 1 à 6,
**caractérisé en ce que** les fins de fil métallique de bobinage des enroulements de stator (5) sont reliées les unes aux autres par l'intermédiaire d'un pont de commutation (12) en un point neutre commun, lequel pont de commutation est fixé dans le support de contact (2), en particulier est clipsé dans des éléments de retenue (13) dudit support de contact.

8. Stator (1) selon l'une quelconque des revendications 3 à 7,
**caractérisé en ce que** la partie de carter de contact (8), à travers laquelle la broche de contact (9) est guidée, présente une ouverture conique ou un biseau d'introduction (23) servant au montage de la broche de contact (9).
